# EUROPEAN PATENT APPLICATION

(11) **EP 4 169 985 A1**
(43) Date of publication of application: **26.04.2023**
(21) Application number: 21829669.7
(22) Date of filing: 26.04.2021
(51) Int. Cl.: C09D 5/02, C09D 5/08, C09D 163/00, C09D 175/04, B32B 15/092, C09D 7/61

(54) **WATER-BASED ANTICORROSIVE COATING COMPOSITION**

(30) Priority: 22.06.2020 JP 2020107221
(71) Applicant: Nippon Paint Industrial Coatings Co., Ltd., Tokyo 140-8675 (JP)
(72) Inventor: NAKAMURA, Isao, Osaka-shi, Osaka 531-8511 (JP); MARUYAMA, Kota, Osaka-shi, Osaka 531-8511 (JP); MORISAKI, Chiyuki, Osaka-shi, Osaka 531-8511 (JP)
(74) Representative: Mewburn Ellis LLP
(86) International application number: PCT/JP2021/016656
(87) International publication number: WO 2021/261071

(57) **Abstract**

The present disclosure is directed to provide an aqueous anticorrosive coating composition capable of imparting a good corrosion resistance to various metal bases. The aqueous anticorrosive coating composition of the present disclosure is an aqueous anticorrosive coating composition containing an aqueous base component (I) and an aqueous curing agent (II), wherein the aqueous base component (I) contains an aqueous epoxy resin dispersion (A) and an inorganic anticorrosive pigment (B), and the aqueous curing agent (II) contains an aromatic group-containing polyamine compound (D) and a thiazole-based compound (C).

## Description

### TECHNICAL FIELD

The present invention relates to an aqueous anticorrosive coating composition including an aqueous base component (I) and an aqueous curing agent (II).

### BACKGROUND ART

In recent years, as environmental problems become more serious, reduction of environmental load is also desired in the coating material field, and various studies have been made. One important problem in the coating material field is a reduction of an amount of an organic solvent usage. From such a viewpoint, aqueous coating materials are adopted as a coating material in which an amount of organic solvent is reduced, and the amount of usage thereof is increasing in various fields.

The applications of coating materials include general industrial applications such as building exterior, bridges, ship, vehicles, industrial machines, construction machines, and automobiles. Among these general industrial applications, particularly when a large and thick base is coated, it is difficult to use a bake-type coating material because the article to be coated has a large heat capacity. A room-temperature drying type coating material is therefore often used.

As a room-temperature drying type coating material, an amine curing type two-pack curable epoxy coating material is known. A two-pack curable epoxy coating material has superior properties in adhesion, water resistance, and corrosion resistance, and is used as an undercoat coating material (primer) and an anticorrosive coating material at the time of coating. In order to make such a two-pack curable epoxy coating material aqueous, hydrophilization is performed by modifying an epoxy resin as a base resin with an aliphatic polyol (see, for example, JP-A-09-111099 (Patent Literature 1)).

However, when a two-pack curable aqueous covering composition is prepared by using such a resin and is applied for coating, there are technical problems such as inferior curability, pot life, and the like compared to those of conventional epoxy-based room-temperature drying type coating compositions, and inferior physical properties such as adhesion and chemical resistance of a resulting coating film. For example, if the chemical resistance of a coating film is deteriorated, when the coating film is applied to industrial machines and the like, the coating film may be corroded upon coming into contact with a chemical agent such as cutting oil, and the physical properties of the base resin may be deteriorated.

From the viewpoint of further improvement in vehicle fuel efficiency, energy saving, and reduction in carbon dioxide emission in recent years, weight reduction is required in vehicle bodies such as automobiles or railway vehicle bodies and components for various vehicles. As one of means for reducing the weight of these vehicle bodies and vehicle components, a part or all of a steel based-materials are replaced with an aluminum based-materials. On the other hand, for example, when the components made of a steel based-material are replaced with an aluminum based-material, it is necessary to impart anticorrosion performance to both the steel based-material and the aluminum based-material constituting a vehicle body and vehicle components. However, although it is possible to impart corrosion resistance to a steel base with a conventional aqueous anticorrosive coating composition, it is difficult to impart corrosion resistance to both a steel based- and an aluminum based-materials.

### CITATIONS LIST

### PATENT LITERATURE

Patent Literature 1: JP-A-09-111099

### SUMMARY OF INVENTION

### TECHNICAL PROBLEMS

The present disclosure is directed to solve the problems of the above-described conventional technologies. More specifically, the present disclosure is directed to provide an aqueous anticorrosive coating composition capable of imparting a good corrosion resistance to various metal bases.

### SOLUTIONS TO PROBLEMS

In order to solve the above-described problems, the present invention provides the following embodiments.
[1] An aqueous anticorrosive coating composition including an aqueous base component (I) and an aqueous curing agent (II), in which
   the aqueous base component (I) includes an aqueous epoxy resin dispersion (A) and an inorganic anticorrosive pigment (B), and
   the aqueous curing agent (II) includes an aromatic group-containing polyamine compound (D) and a thiazole-based compound (C).
[2] The aqueous anticorrosive coating composition according to [1], in which
   the inorganic anticorrosive pigment (B) includes one or more pigments selected from the group consisting of a phosphoric acid-based anticorrosive pigment, a zinc oxide-based anticorrosive pigment, a molybdenum-based anticorrosive pigment, a boric acid-based anticorrosive pigment, a borosilicic acid-based anticorrosive pigment, a phosphosilicic acid-based anticorrosive pigment, a vanadic acid-based anticorrosive pigment, and a tungstic acid-based anticorrosive pigment.
[3] The aqueous anticorrosive coating composition according to [1] or [2], in which
   a mass ratio [(B) : (C)] of the inorganic anticorrosive pigment (B) to the thiazole-based compound (C) contained in the aqueous anticorrosive coating composition is in a range of (B) : (C) = 99.5 : 0.5 to 60 : 40.
[4] The aqueous anticorrosive coating composition according to any one of [1] to [3], in which the inorganic anticorrosive pigment (B) includes a phosphoric acid-based anticorrosive pigment and a molybdenum-based anticorrosive pigment.
[5] The aqueous anticorrosive coating composition according to any one of [1] to [4], in which the aromatic group-containing polyamine compound (D) includes a polyamine compound containing a hydroxyl group and an aromatic group.
[6] The aqueous anticorrosive coating composition according to any one of [1] to [5], in which the aromatic group-containing polyamine compound (D) comprises a water-soluble polyamine compound having a hydroxyl group, a linear or branched hydrocarbon group having 6 to 30 carbon atoms, and an aromatic group.
[7] The aqueous anticorrosive coating composition according to any one of [1] to [6], in which the aromatic group-containing polyamine compound (D) is a phenalkamine compound.
[8] The aqueous anticorrosive coating composition according to any one of [1] to [7], in which the aqueous epoxy resin dispersion (A) has an epoxy equivalent in a range of 100 to 10,000 g/eq.
[9] The aqueous anticorrosive coating composition according to any one of [1] to [8], in which a ratio of an epoxy group content of the aqueous epoxy resin dispersion (A) contained in the aqueous base component (I) to an active hydrogen content of the aromatic group-containing polyamine compound (D) contained in the aqueous curing agent (II) is in a range of [epoxy group content of (A)]:[active hydrogen content of (D)] = 1:0.4 to 1:1.2.
[10] The aqueous anticorrosive coating composition according to any one of [1] to [9], in which the aqueous anticorrosive coating composition further includes an aqueous polyurethane resin dispersion.
[11] The aqueous anticorrosive coating composition according to any one of [1] to [10], in which the thiazole-based compound (C) includes a benzothiazole compound.
[12] The aqueous anticorrosive coating composition according to any one of [1] to [11], which is for an aluminum based-material and a steel based-material.

### ADVANTAGEOUS EFFECTS OF INVENTION

The aqueous anticorrosive coating composition can impart corrosion resistance to a metal base, particularly to both a steel base and an aluminum base.

### DESCRIPTION OF EMBODIMENTS

The aqueous anticorrosive coating composition includes an aqueous base component (I) and an aqueous curing agent (II). The aqueous base component (I) includes an aqueous epoxy resin dispersion (A) and an inorganic anticorrosive pigment (B), and the aqueous curing agent (II) includes an aromatic group-containing polyamine compound (D) and a thiazole-based compound (C). In the following, respective components are described.

### Aqueous epoxy resin dispersion (A)

The aqueous epoxy resin dispersion (A) contained in the aqueous base component (I) is a component in which an epoxy resin is dispersed in water. The epoxy resin is preferably a resin having at least two epoxy groups on average per molecule. The epoxy equivalent of the epoxy resin is preferably in a range of 100 to 10,000 g/eq, and more preferably in a range of 150 to 5,000 g/eq. In the present disclosure, the epoxy equivalent represents a solid epoxy equivalent, and can be measured by a method in accordance with JIS K 7236.

The number average molecular weight of the epoxy resin may be, for example, in a range of 200 to 20,000, preferably in a range of 300 to 10,000, and more preferably in a range of 500 to 6,000. In the present disclosure, the number average molecular weight is a polystyrene-equivalent value determined by gel permeation chromatography (GPC).

The epoxy resin may be saturated or unsaturated, may be aliphatic, alicyclic, aromatic and/or heterocyclic, and may have a hydroxyl group.

The epoxy resin is preferably a polyglycidyl ether type epoxy resin having a skeleton based on a polyhydric phenol, a polyhydric alcohol, a hydrogenated product of a polyhydric phenol, and/or a novolac phenol. Among the skeletons, a polyhydric alcohol and/or a phenol is preferable, and a dihydric alcohol is preferable.

Examples of the polyhydric phenol include resorcinol, hydroquinone, 2,2-bis(4-hydroxyphenyl)propane (bisphenol A), an isomer mixture of dihydroxydiphenylmethane (bisphenol F), tetrabromobisphenol A, 4,4'-dihydroxydiphenylcyclohexane, 2,2-bis(4-hydroxy-3-methylphenyl)propane, 4,4'-dihydroxybiphenyl, 4,4'-dihydroxybenzophenone, 1,1-bis(4-hydroxyphenyl)ethane, 2,2-bis[4-(2'-hydroxypropoxy)phenyl]propane, 1,1-bis(4-hydroxyphenyl)isobutane, 2,2-bis(4-hydroxy-3-tert-butylphenyl)propane, bis(2-hydroxynaphthyl)methane, 1,5-dihydroxynaphthalene, tris(4-hydroxyphenyl)methane, and bis(4-hydroxyphenyl) ether, bis(4-hydroxyphenyl)sulfone, and halogenated or hydrogenated products of these compounds.

The polyhydric alcohol is not particularly limited, and examples thereof include ethylene glycol, diethylene glycol, triethylene glycol, polyethylene glycols (n = 4 to 35), 1,2-propylene glycol, polypropylene glycols (n = 2 to 15), 1,3-propylene glycol, 1,4-butanediol, 1,5-pentanediol, 1,6-hexanediol, 1,2,6-hexanetriol, glycerol, neopentyl glycol, trimethylolethane, and trimethylolpropane. Among the above-mentioned compounds, polypropylene glycols (n = 8 to 10) are particularly preferable.

As the epoxy resin, for example, a polyglycidyl ester obtained through a reaction of a polycarboxylic acid with epichlorohydrin or a derivative thereof can also be used. The polycarboxylic acid is not particularly limited, and examples thereof include aliphatic, alicyclic, or aromatic polycarboxylic acids such as oxalic acid, succinic acid, adipic acid, glutaric acid, phthalic acid, terephthalic acid, hexahydrophthalic acid, 2,6-naphthalenedicarboxylic acid, and dimerized linolenic acid. Among them, diglycidyl adipate, diglycidyl phthalate, and diglycidyl hexahydrophthalate are preferable. Among those epoxy resins, bisphenol type epoxy resins such as bisphenol A type epoxy resins and bisphenol F type epoxy resins are preferable.

The epoxy resin may be a polyol-modified epoxy resin obtained by reacting an aliphatic polyol compound with an epoxy resin, as necessary. The polyol-modified epoxy resin can be prepared by a condensation reaction of the epoxy resin with an aliphatic polyol compound. In the condensation reaction, the mass ratio of the epoxy resin to the aliphatic polyol compound (the mass of the epoxy resin : the mass of the aliphatic polyol compound) is preferably in a range of 95:5 to 5:95. The polyol-modified epoxy resin has the advantage of having good water dispersion performance.

The aliphatic polyol compound is not particularly limited, and examples thereof include polyether polyols, polyester polyols, polycarbonate polyols, and polyurethane polyols, and among them, polyalkylene glycols, which are polyether polyols, are preferable. As the polyalkylene glycol, polyalkylene glycols having alkylene groups having 4 or less carbon atoms are preferable, and examples thereof include polyethylene glycol, polypropylene glycol, polybutylene glycol, and block copolymers of ethylene oxide and propylene oxide. In addition, mixtures or copolymers of the polyalkylene glycols can also be used. In addition, polyalkylene glycols partially terminally blocked with a monohydric alcohol or the like may also be employed. The polyalkylene glycol may partially have a branched structure, but is more preferably a linear polyalkylene glycol.

The aliphatic polyol compound may be a mixture of the polyalkylene glycol and other aliphatic polyol. Examples of such other aliphatic polyol include polyester polyols, polycarbonate polyols, polyamide polyols, and polyurethane polyols, and polyester polyols are particularly preferable. The amount of the other aliphatic polyol is preferably 30% or less, and more preferably 10% or less of the aliphatic polyol compound in terms of mass.

Examples of the other aliphatic polyol include an aliphatic polyester polyol of an aliphatic dicarboxylic acid with an aliphatic diol, and a compound obtained through a condensation reaction of compounds selected from a dicarboxylic acid having 3 to 40 carbon atoms, a diol having 2 to 20 carbon atoms, a primary diamine having 2 to 40 carbon atoms or a polyalkylene polyamine compound or an amino alcohol or the like.

The condensation is preferably a condensation reaction performed at a ratio such that a ratio of the hydroxyl group equivalent of the aliphatic polyol compound to the epoxy equivalent of the epoxy resin, z(OH) : z(EP), is 1 : 3.6 to 1 : 10. The ratio z(OH) : z(EP) is more preferably in a range of 1 : 4 to 1 : 9, and even more preferably in a range of 1 : 4.5 to 1 : 8. Advantageously, a good water dispersibility can be obtained by performing the reaction in the above range. The epoxy equivalent of the modified epoxy resin (polyol-modified epoxy resin) is preferably in a range of 100 to 10,000 g/eq, more preferably in a range of 150 to 5,000 g/eq, and even more preferably in a range of 200 to 2,000 g/eq.

The epoxy resin contained in the aqueous epoxy resin dispersion (A) preferably includes a polyol-modified bisphenol type epoxy resin such as a polyol-modified bisphenol A type epoxy resin or a polyol-modified bisphenol F type epoxy resin. These polyol-modified bisphenol type epoxy resins have the advantages of having suitable water dispersibility and affording coating films with good physical properties. In another embodiment, for example, the polyol-modified epoxy resin (preferably including a polyol-modified bisphenol type epoxy resin) and a bisphenol type epoxy resin (a bisphenol type epoxy resin without polyol-modification) may be used in combination.

In the preparation of the aqueous epoxy resin dispersion (A), the aqueous dispersion can be yielded by performing a synthesis reaction of an epoxy resin (a polyol-modified epoxy resin) in the absence of any solvent or in the presence of an appropriate organic solvent, then dropping the resultant into water, mixing the resultant, and removing an excessive solvent, as necessary. When the epoxy resin is dispersed in water, a dispersant such as a surfactant may be used, as necessary.

A commercially available product may be used as the aqueous epoxy resin dispersion (A). Examples of the commercially available product include BECKOPOX series (manufactured by Allnex Japan Inc.), jER series (manufactured by Mitsubishi Chemical Corporation), and ADEKA RESIN EM series (manufactured by ADEKA Corporation).

These aqueous epoxy resin dispersions may be used singly, or two or more of them may be used in combination.

The aqueous base component (I) may include other resin component in addition to the aqueous epoxy resin dispersion (A), as necessary. Examples of such other resin component include an aqueous polyurethane resin dispersion, an aqueous polyester dispersion, and an aqueous acrylic resin dispersion. As a preferable resin component in the case of further including other resin component, an aqueous polyurethane resin dispersion is preferable from the viewpoint of, for example, compatibility with the aqueous epoxy resin dispersion (A). When the aqueous base component (I) further includes other resin component such as an aqueous polyurethane resin dispersion, a preferable amount thereof is such an amount that neither performances of the aqueous anticorrosive coating composition nor anticorrosion performance of a resulting coating film is impaired. When the aqueous base component (I) further includes an aqueous polyurethane resin dispersion in addition to the aqueous epoxy resin dispersion (A), the content of the aqueous polyurethane resin dispersion is preferably in a range of 0.5 to 20 parts by mass in terms of resin solid content based on 100 parts by mass of the resin solid content of the aqueous epoxy resin dispersion (A).

### Inorganic anticorrosive pigment (B)

Examples of the inorganic anticorrosive pigment (B) contained in the base component (I) include a phosphoric acid-based anticorrosive pigment, a zinc oxide-based anticorrosive pigment, a molybdenum-based anticorrosive pigment, a boric acid-based anticorrosive pigment, a borosilicic acid-based anticorrosive pigment, a phosphosilicic acid-based anticorrosive pigment, a vanadic acid-based anticorrosive pigment, and a tungstic acid-based anticorrosive pigment. These inorganic anticorrosive pigments may be used singly, or two or more of them may be used in combination.

Examples of the phosphoric acid-based anticorrosive pigment include a phosphorus oxyacid metal salt. Examples of the metal include one metal or two or more metals selected from Mg, Ca, Ba, Sr, Zn, and Al. Examples of the phosphorus oxyacid salt include phosphites, phosphates, and/or polyphosphates. Specific examples of the phosphoric acid-based anticorrosive pigment include metal phosphites such as magnesium phosphite, calcium phosphite, barium phosphite, strontium phosphite, zinc phosphite, aluminum phosphite, zinc calcium phosphite, and zinc potassium phosphite. Examples of the metal phosphate include magnesium phosphate, calcium phosphate, barium phosphate, strontium phosphate, zinc phosphate, aluminum phosphate, zinc magnesium phosphate, zinc calcium phosphate, zinc potassium phosphate, and zinc potassium phosphate. Examples of the metal polyphosphate include aluminum pyrophosphate, calcium polyphosphate, magnesium polyphosphate, zinc polyphosphate, and aluminum polyphosphate. These compounds may be modified with silica or the like, as necessary.

Examples of the zinc oxide-based anticorrosive pigment include zinc oxide and modified zinc oxide. Examples of the modified zinc oxide include zinc oxide modified with a metal salt such as a metal nitrite.

Examples of the molybdenum-based anticorrosive pigment include metal molybdates. Examples of the metal molybdate include zinc molybdate, calcium molybdate, barium molybdate, aluminum molybdate, magnesium molybdate, strontium molybdate, zinc calcium molybdate, and zinc potassium molybdate. Examples of the phosphomolybdate include zinc molybdate, calcium molybdate, barium molybdate, aluminum molybdate, magnesium molybdate, strontium molybdate, and zinc potassium molybdate.

Examples of the boric acid-based anticorrosive pigment include metal borates and metal metaborates. Examples of the metal borate include zinc borate, calcium borate, barium borate, aluminum borate, magnesium borate, strontium borate, zinc calcium borate, and zinc potassium borate. Examples of the metal metaborate include barium metaborate.

Examples of the borosilicic acid-based anticorrosive pigment include metal borosilicates. Examples of the metal borosilicate include zinc borosilicate, calcium borosilicate, barium borosilicate, aluminum borosilicate, magnesium borosilicate, strontium borosilicate, zinc potassium borosilicate, zinc calcium strontium borosilicate, and calcium strontium zinc borosilicate.

Examples of the phosphosilicic acid-based anticorrosive pigment include metal phosphosilicates. Examples of the metal phosphosilicate include zinc phosphosilicate, calcium phosphosilicate, barium phosphosilicate, aluminum phosphosilicate, magnesium phosphosilicate, strontium phosphosilicate, zinc potassium phosphosilicate, zinc calcium phosphosilicate, and strontium calcium zinc phosphosilicate.

The metal salts described above may be any of normal salts, basic salts, and complex salts, and may be either hydrous or anhydrous.

Examples of the inorganic anticorrosive pigment other than those described above include vanadic acid-based anticorrosive pigments and tungstic acid-based anticorrosive pigments. Further examples include cyanamide zinc calcium-based anticorrosive pigments, and modified silica-based anticorrosive pigments in which cations of metal such as calcium, zinc, cobalt, lead, strontium, and barium are bonded to porous silica particles.

A commercially available product may be used as the inorganic anticorrosive pigment (B). Examples of the commercially available product include LF BOUSEI PM-300C (manufactured by Kikuchi Color & Chemicals Corporation) and K-WHITE #140W (manufactured by TAYCA Corporation), which are phosphoric acid-based anticorrosive pigments, LF BOUSEI M-PSN (manufactured by Kikuchi Color & Chemicals Corporation), which is a molybdenum-based anticorrosive pigment, and second type of zinc oxide (manufactured by Sakai Chemical Industry Co., Ltd.), which are zinc oxide-based anticorrosive pigments.

The inorganic anticorrosive pigment (B) may be used singly, or two or more thereof may be used in combination. The inorganic anticorrosive pigment (B) preferably includes at least one pigment selected from the group consisting of phosphoric acid-based anticorrosive pigments, zinc oxide-based anticorrosive pigments, and molybdenum-based anticorrosive pigments, and more preferably includes at least one pigment selected from the group consisting of phosphoric acid-based anticorrosive pigments and molybdenum-based anticorrosive pigments. In addition, both a phosphoric acid-based anticorrosive pigment and a molybdenum-based anticorrosive pigment may be contained. The embodiment described above offers the advantages that a coating film obtained from an aqueous anticorrosive coating composition can impart a better corrosion resistance to both a steel based- and an aluminum based-materials and can achieve a particularly favorable long-term corrosion resistance.

The amount of the inorganic anticorrosive pigment (B) contained in the aqueous anticorrosive coating composition is preferably in a range of 10 to 80 parts by mass, and more preferably in a range of 15 to 60 parts by mass, based on 100 parts by mass of the resin solid content contained in the aqueous anticorrosive coating composition. In the present disclosure, the "resin solid content contained in the aqueous anticorrosive coating composition" refers to the total resin solid content of the aqueous epoxy resin dispersion (A) and the aromatic group-containing polyamine compound (D), unless otherwise specified. When two or more of these are used, it refers to the total of the resin solid contents thereof.

The aqueous base component (I) may further include other pigments, as necessary, in addition to the inorganic anticorrosive pigment (B). The aqueous curing agent (II) described later also may further include other pigment, as necessary. Examples of such other pigment include coloring pigments and extender pigments. Examples of the coloring pigment include inorganic coloring pigments such as titanium oxide, carbon black, iron oxide, and yellow iron oxide; various organic coloring pigments such as phthalocyanine pigments such as phthalocyanine blue and phthalocyanine green; azo pigments such as azo red, azo yellow, and azo orange; quinacridone pigments such as quinacridone red, cinquasia red, and cinquasia magenta; perylene pigments such as perylene red and perylene maroon; carbazole violet, anthrapyridine, flavanthrone yellow, isoindoline yellow, indanthrone blue, dibromoanzathrone red, anthraquinone red, and diketopyrrolopyrrole. Examples of the extender pigment include calcium carbonate, precipitated barium sulfate, clay, and talc.

### Thiazole-based compound (C)

The thiazole-based compound (C) contained in the aqueous curing agent (II) is a kind of organic anticorrosive component. The use of the thiazole-based compound (C) in combination with the inorganic anticorrosive pigment (B) in the aqueous anticorrosive coating composition offers the advantage that a coating film obtained from the aqueous anticorrosive coating composition can impart a good corrosion resistance to both a steel based- and an aluminum based-materials.

As the thiazole-based compound (C), a benzothiazole-based compound is preferable. Examples of the benzothiazole-based compound include mercaptobenzothiazole compounds and salts thereof such as 2-mercaptobenzothiazole; disulfides of mercaptobenzothiazoles (for example, dibenzothiazyl disulfide); benzothiazole monocarboxylic acid compounds and salts thereof such as 3-(2-benzothiazylthio)propionic acid and (2-benzothiazylthio)acetic acid; and benzothiazole dicarboxylic acid compounds and salts thereof such as (benzothiazol-2-ylthio)succinic acid and di-C₁₂₋₁₄ alkylammonium (2-benzothiazol-2-ylthio)succinate. Examples of the salts include alkali metal salts or alkaline earth metal salts. These may be used singly, or two or more of them may be used in combination.

In addition to the thiazole-based compound (C), other organic anticorrosive component may be used in combination. Examples of such other organic anticorrosive component include ketocarboxylic acid-based organic anticorrosive components such as an addition reaction product of 4-methyl-γ-oxo-benzenebutanoic acid with N-ethylmorpholine and an addition reaction product of 4-methyl-γ-oxo-benzenebutanoic acid with zirconium; para-tert-butylbenzoic acid and salts thereof; and nitrite salt-based organic anticorrosive components such as dicyclohexylamine nitrite.

The amount of the thiazole-based compound (C) contained in the aqueous anticorrosive coating composition is preferably in a range of 0.3 to 30 parts by mass, and more preferably in a range of 1 to 15 parts by mass, based on 100 parts by mass of the resin solid content contained in the aqueous anticorrosive coating composition.

The mass ratio ((B):(C)) of the inorganic anticorrosive pigment (B) to the thiazole-based compound (C) contained in the aqueous anticorrosive coating composition is preferably in a range of 99.5:0.5 to 60:40, and more preferably in a range of 99:1 to 80:20. The condition that the mass ratio (B):(C) is in the above range offers the advantages that a coating film obtained from the aqueous anticorrosive coating composition can impart a better corrosion resistance to both a steel base and an aluminum base, and particularly can impart an anticorrosion performance improving effect due to initial adhesion improvement can be obtained.

### Aromatic group-containing polyamine compound (D)

The aqueous curing agent (II) includes an aromatic group-containing polyamine compound (D). The aromatic group-containing polyamine compound (D) is a curing agent for the aqueous epoxy resin dispersion (A) contained in the aqueous base component (I). In the present description, the "polyamine compound" means a compound having two or more amino groups. The amino groups of the polyamine compound may be primary amino groups, secondary amino groups, or both a primary amino group and a secondary amino group.

The aromatic group of the aromatic group-containing polyamine compound (D) may be an aromatic hydrocarbon group or a heteroaromatic group. The aromatic group may also be monocyclic or polycyclic.

Examples of the aromatic group-containing polyamine compound (D) include aromatic compounds having two or more alkylamino groups. The number of carbon atoms of the alkylamino group is preferably in a range of 1 to 10. Specific examples of such compounds include ortho-xylylenediamine, meta-xylylenediamine, and para-xylylenediamine. As the aromatic group-containing polyamine compound (D), a phenalkamine compound may be used.

The aromatic group-containing polyamine compound (D) preferably includes a polyamine compound containing a hydroxyl group and an aromatic group. The aromatic group-containing polyamine compound (D) has the advantage of having good water solubility/water dispersibility in the aqueous curing agent (II) due to having a hydroxyl group in addition to an aromatic group. The aromatic group-containing polyamine compound (D) is preferably water-soluble.

The aromatic group-containing polyamine compound (D) preferably includes a polyamine compound having a hydroxyl group, a linear or branched hydrocarbon group having 6 to 30 carbon atoms, and an aromatic group. The linear or branched hydrocarbon group having 6 to 30 carbon atoms may be a saturated hydrocarbon group or an unsaturated hydrocarbon group containing one or more unsaturated bonds. The number of the carbon atoms of the aromatic group is, for example, 3 to 30, and preferably is 6 to 30.

As the aromatic group-containing polyamine compound (D), a phenalkamine compound is preferable. The phenalkamine compound is a polyamine compound having a hydroxyl group (a phenolic hydroxyl group), a linear or branched hydrocarbon group having 6 to 30 carbon atoms, and an aromatic group. The polyamine moiety constituting the phenalkamine compound has an ethylenediamine structure. Advantageously, when the phenalkamine compound has this structure, the compound exhibits good water solubility, good coating film surface orientation property during application, and good reactivity to hydroxyl groups of an epoxy resin, and a resulting coating film is good in water resistance, corrosion resistance, and adhesion to bases.

Phenalkamine compounds can be synthesized, for example, by a Mannich base reaction of an alkylphenol, an aldehyde and an amine (a primary amine, a secondary amine, etc.). Examples of the amine to be used in the Mannich base reaction include ethylenediamine, diethyltriamine, triethylenetetramine, tetraethylenepentamine, m-xylenediamine, isophoronediamine, and condensation reaction products thereof. The amine may be a mixture.

Examples of the alkylphenol to be used in the Mannich base reaction include phenols having a linear or branched hydrocarbon group having 6 to 30 carbon atoms. The alkylphenol may be an extract. As the alkylphenol, for example, a cardanol-containing extract obtained from a cashew nut shell liquid can be used. The cardanol-containing extract is a known component described in, for example, WO 2004/024792.

As the aldehyde to be used in the Mannich base reaction, formaldehyde is suitably used. The Mannich base reaction can be conducted under acidic or basic conditions, preferably acidic conditions, under conditions known to those skilled in the art.

The aromatic group-containing polyamine compound (D) may also be a polyol-modified compound obtained by reacting part of the amino groups of the polyamine with the epoxy group of the polyol-modified epoxy resin. Advantageously, by modifying part of the amino groups with a polyol, a hydrophilic group is introduced and water solubility or water dispersion performance is improved.

The active hydrogen equivalent of the aromatic group-containing polyamine compound (D) is preferably in a range of 30 to 250 g/eq, and more preferably in a range of 50 to 200 g/eq. In the present disclosure, the active hydrogen equivalent of the aromatic group-containing polyamine compound (D) is a solid content value (a value of the amine component amount) excluding a solvent, and can be calculated from a solid content amine value measured in accordance with the provision of JIS K 7237 and a structural formula.

A commercially available product may be used as the aromatic group-containing polyamine compound (D). Examples of the commercially available product include Cardolite (trademark) series (manufactured by Cardolite Corporation), Phenalkamine series (manufactured by Paladin Paints & Chemicals Pvt. Ltd.), and SUNMIDE series (manufactured by Evonik Industries AG).

The ratio of the epoxy group content of the aqueous epoxy resin dispersion (A) contained in the aqueous base component (I) to the active hydrogen content of the aromatic group-containing polyamine compound (D) contained in the aqueous curing agent (II) [the epoxy group content of (A) : the active hydrogen content of (D)] is preferably in a range of 1 : 0.4 to 1 : 1.2, and more preferably in a range of 1 : 0.6 to 1 : 0.9. The condition that the ratio of the contents is in the above range offers the advantages that a better reactivity of the aqueous epoxy resin dispersion (A) with the aromatic group-containing polyamine compound (D) is secured and that a coating film obtained from the aqueous anticorrosive coating composition can exhibit good water resistance and corrosion resistance. In the present disclosure, the epoxy group content means a value calculated by the blending amount (g) of the aqueous epoxy resin dispersion/the epoxy equivalent (g/eq), and the active hydrogen content means a value calculated by the blending amount (g) of the aromatic group-containing polyamine compound/the active hydrogen equivalent (g/eq). When two or more aqueous epoxy resin dispersions are used in combination, the epoxy group content of each dispersion is calculated, and the total value thereof is meant. Also when two or more aromatic group-containing polyamine compounds are used in combination, the active hydrogen content of each compound is calculated, and the total value thereof is meant.

The number average molecular weight of the aromatic group-containing polyamine compound (D) may be, for example, in a range of 200 to 20,000, preferably in a range of 300 to 15,000, and more preferably in a range of 1,000 to 10,000.

The aqueous curing agent (II) may include other polyamine compound in addition to the aromatic group-containing polyamine compound (D), as necessary. Examples of such other polyamine compound include polyalkyleneamines such as diethylenetriamine, triethylenetetramine, tetraethylenepentamine, and pentaethylenehexamine; aliphatic diamines such as 2,2,4- and/or 2,4,4-trimethylhexamethylenediamine, bis(3-aminopropyl)amine, 1,4-bis(3-aminopropyl)piperazine, N,N-bis(3-aminopropyl)ethylenediamine, neopentanediamine, 2-methyl-1,5-pentanediamine, 1,3-diaminopentane, and hexamethylenediamine; and alicyclic amines such as 1,2- and 1,3-diaminocyclohexane, 1,4-diamino-3,6-diethylcyclohexane, 1,2-diamino-4-ethylcyclohexane, 1-cyclohexyl-3,4-diaminocyclohexane, isophoronediamine and reaction products thereof, 4,4'-diaminodicyclohexyl-methane and -propane, bis(4-aminocyclohexyl)-methane and - propane, 3,3'-dimethyl-4,4'-diaminodicyclohexylmethane, 3-amino-1-cyclohexylaminopropane, and 1,3- and 1,4-bis(aminomethyl)cyclohexane.

When other polyamine compound is used in combination, the ratio of the epoxy group content of the aqueous epoxy resin dispersion (A) contained in the aqueous base component (I) to the active hydrogen content of the other polyamine compound contained in the aqueous curing agent (II) [the epoxy group content of (A):the active hydrogen content of the other polyamine] is preferably in a range of 1:0 to 1:0.8, and more preferably in a range of 1:0 to 1:0.5. The condition that the amount of the other polyamine compound is in the above range offers the advantage that a coating film obtained from the aqueous anticorrosive coating composition can exhibit good corrosion resistance.

### Preparation of aqueous anticorrosive coating composition and formation of coating film

The aqueous base component (I) and the aqueous curing agent (II) of the aqueous coating composition can be prepared by mixing the above-described components by a method known to those skilled in the art. As a method for preparing the coating composition, methods usually used by those skilled in the art can be used. For example, methods commonly used by those skilled in the art can by adopted, which include a kneading and mixing means using a kneader or a roll, or a dispersing and mixing means using a sand grinding mill or a disper.

The aqueous base component (I) and the aqueous curing agent (II) of the aqueous coating composition may further include other components used in the field of coating compositions, as necessary. Such other component is not particularly limited, and examples thereof include a film formation aid, an ultraviolet absorber, a hindered amine light stabilizer, an antioxidant, crosslinked resin particles, a curing catalyst, a pigment dispersant, an anti-settling agent, a defoaming agent, a surfactant, a viscosity control agent, an organic solvent, an antiseptic agent, a surface conditioning agent, and a flash rust inhibitor.

By applying the aqueous anticorrosive coating composition to a base that is an article to be coated and forming a coating film, corrosion resistance can be imparted to the base. Regarding the mixing timing of the aqueous base component (I) and the aqueous curing agent (II) in the above-described aqueous anticorrosive coating composition, the aqueous base component (I) and the aqueous curing agent (II) may be mixed before use, followed by the application by an ordinary coating method. Alternatively, the application may be carried out by a method in which the respective liquids are sent to a gun with a two-liquid mixing gun and then mixed at a gun tip.

Examples of the article to which the aqueous anticorrosive coating composition is applied include metal based-materials. Examples of the metal based-materials include metals such as iron, steel, copper, aluminum, tin, and zinc, and alloys containing such metals. The metal based-materials may be plated with zinc, copper, chromium, or the like, or may be surface-treated with a surface treatment agent such as chromic acid, zinc phosphate, or zirconium salt. The article to be coated may include a plastic based-material. Examples of the plastic based-materials include polypropylene resin, polycarbonate resin, polyurethane resin, polyester resin, polystyrene resin, ABS resin, vinyl chloride resin, and polyamide resin. These plastic bases may be primed. The article to be coated with the aqueous anticorrosive coating composition may be wood, glass, cloth, concrete, a ceramic-based material, or the like besides the above-mentioned bases.

The aqueous anticorrosive coating composition has the advantage of being able to impart a good corrosion resistance to various metal bases such as iron and aluminum. Therefore, the article to be coated may include, for example, both an aluminum based-material and an iron based-material.

The article to be coated with the aqueous anticorrosive coating composition may be a molded product including the base described above. Examples of the molded article include various molded articles such as automobile bodies, various vehicle bodies, and parts for home electric appliances. Specific examples of such an article to be coated include large articles (for example, railroad vehicles, hulls, buildings, and constructed structures); construction machines (for example, bulldozers, scrapers, hydraulic excavators, digging machines, transport machines (for example, trucks and trailers), cranes/cargo handling machines, foundation work machines (for example, diesel hammers and hydraulic hammers), tunnel construction machines (for example, boring machines), and road rollers); and industrial machines such as light and heavy electrical equipment for general industrial use, agricultural machines, steel furniture, machine tools and large vehicles.

The method for applying the aqueous anticorrosive coating composition is not particularly limited, and examples thereof include coating methods commonly used such as immersion, brush, roller, roll coater, air spray, airless spray, curtain flow coater, roller curtain coater, and die coater. In the spray coating, a two-liquid mixing gun may be used, if necessary. These can be appropriately selected according to the article to be coated.

The aqueous anticorrosive coating composition is applied such that the dry film thickness after forming a coating film is 20 to 200 µm, and preferably 30 to 100 µm. The curing temperature of the aqueous coating composition is preferably in a range of 20°C to 150°C, and more preferably in a range of 40°C to 100°C. The curing time may be appropriately chosen according to the curing temperature, and may be, for example, in a range of 10 minutes to 7 days.

Since the aqueous anticorrosive coating composition includes both the inorganic anticorrosive pigment (B) and the thiazole-based compound (C) and also includes the aromatic group-containing polyamine compound (D), a coating film obtained from the aqueous anticorrosive coating composition has the advantage that the film can impart a good corrosion resistance to various metal bases, especially to both a steel based- and an aluminum based-materials.

### EXAMPLES

The present invention will be described more specifically with reference to the following examples, but the present invention is not limited to the examples. In the examples, "parts" and "%" are on a mass basis unless otherwise indicated.

### Example 1

### Production of aqueous base component (1)

An aqueous base component (1) was obtained by mixing and stirring 46.97 parts of BECKOPOX EP 386w/52WA (manufactured by Allnex Japan Inc.) as the aqueous epoxy resin dispersion (A-1), 12.95 parts of LF BOUSEI PM-300C (phosphoric acid-based anticorrosive pigment, manufactured by Kikuchi Color & Chemicals Corporation) as the inorganic anticorrosive pigment (B-1), 13.48 parts of TODA COLOR KN-R (coloring pigment, manufactured by Toda Pigment Corp.; solid concentration: 100%), 0.5 parts of PRIMAL RM-12W (viscosity modifier, manufactured by Dow Chemical International Ltd.; solid concentration: 19%), 1.83 parts of SURFYNOL 440 (surface conditioning agent, manufactured by Evonik Japan; solid concentration: 100%), 4.25 parts of Dispex Ultra PX 4585 (wet dispersant, manufactured by BASF Japan Ltd.; solid concentration: 50%), 0.28 parts of BYK-011 (defoaming agent, manufactured by BYK Japan KK; solid concentration: 30%), 3.68 parts of propylene glycol monomethyl ether, 3.52 parts of diethylene glycol monobutyl ether, and 8.45 parts of ion-exchanged water.

### Preparation of aqueous curing agent (1)

An aqueous curing agent (1) was obtained by mixing and stirring 9.53 parts of Cardolite NX-8101 (manufactured by Cardolite Corporation) as the aromatic group-containing polyamine compound (D-1), 2.02 parts of HALOX 350 (manufactured by ICL SPECIALTY PRODUCTS INC.) as the thiazole-based compound (C-1), 0.48 parts of TAP (curing accelerator; 2,4,6-tris(dimethylaminomethyl)phenol, manufactured by TSUNO Food Industrial Co., Ltd.; solid concentration: 88%), and 3.97 parts of ion-exchanged water by using a disper.

### Application of aqueous anticorrosive coating composition

After degreasing a JIS G 3141 (SPCC-SD) cold-rolled steel sheet having a thickness of 0.8 mm and 70 mm × 150 mm with a solvent, a coating composition including Uniepoch 30 Primer NC (manufactured by Nippon Paint Industrial Coatings Co., Ltd.) as a base component and Uniepoch 30 primer curing agent (manufactured by Nippon Paint Industrial Coatings Co., Ltd.) as a curing agent was mixed as a solvent-based primer coating material by using a disper, and then applied with a spray gun such that a dry film thickness of 30 to 50 µm was achieved, followed by drying at 23°C for 1 day.

Next, a coating composition as a surfacer (intermediate coating material) including naxBES Non-Sanding Primer-Surfacer HS (manufactured by Nippon Paint Industrial Coatings Co., Ltd.) as a base component and naxBES Non-Sanding Primer-Surfacer Hardener HS (manufactured by Nippon Paint Industrial Coatings Co., Ltd.) as a curing agent was mixed with a disper and then applied with a spray gun to the surface of the primer coating film formed on that cold-rolled steel sheet such that a dry film thickness of 40 to 50 µm was achieved, followed by drying at 23°C for 1 day.

Next, the aqueous base component (1) and the water-dispersible curing agent (1) obtained as described above were mixed using a disper such that the ratio of the epoxy group content of the aqueous epoxy resin dispersion (A) to the active hydrogen content of the aromatic group-containing polyamine compound (D) was [(A):(D)] = 1:0.75, and then the mixture was applied to the surface of the surfacer coating film with a spray gun such that the dry film thickness was 30 to 50 µm, and dried at 60°C for 1 hour, affording an anticorrosive coating film.

### Example 2

An aqueous base component (2) was obtained in the same manner as the method for producing the aqueous base component (1) except that 3.81 parts of an aqueous polyurethane resin dispersion (NeoRez R-4000, manufactured by DSM Coating Resins B.V.) was further added to the formulation of the aqueous base component (1) of Example 1. An anticorrosive coating film was obtained by the same procedure as in Example 1 except that the aqueous base component (2) was used.

### Examples 3 to 21, Comparative Examples 1 to 3

An aqueous base component and an aqueous curing agent were prepared in the same manner as in Example 1 except that the type and amount of each component were changed as shown in Tables 1 to 4 below.

In Example 21 and Comparative Example 3, the blending amount of BECKOPOX EH 613w/80WA, which is an aliphatic group-containing polyamine compound, was set to 0.25 and 0.75, respectively, in terms of active hydrogen content of the epoxy group content of (A) of 1.

Using the obtained aqueous base component and aqueous curing agent, an anticorrosive coating film was obtained by the same procedure as in Example 1.

Using the anticorrosive coating films formed in the above Examples and Comparative Examples, the following evaluations were carried out. The results of the evaluations are shown in the following Tables 1 to 4.

### Evaluation of coating film appearance

The appearance of the coating film was visually observed. The evaluation criteria are as follows.
5: The leveling of the coating material is good, and the coating film is uniform with no abnormality.
4: The leveling of the coating material is good, but the coating film is slightly uniform.
3: The leveling of the coating material is slightly poor, and the coating film is slightly uniform.
2: The leveling of the coating material is poor and the coating film is uneven.
1: The leveling of the coating material is significantly poor and the coating film is uneven.

### Evaluation of water resistance

Each specimen was immersed in water at 20°C for 168 hours, and then the appearance of the coating film was visually observed. The evaluation criteria are as follows.
5: No abnormality (blister) occurred in the coating film.
4: There is a blister of less than 1 mm in diameter in a part of the coating film.
3: There is a blister of 1 mm or more and less than 2 mm in diameter in a part of the coating film.
2: There is a blister of 2 mm or more in diameter in a part of the coating film.
1: There is a blister of 2 mm or more on the entire surface of the coating film.

### Evaluation of corrosion resistance (SST, salt spray)

On each specimen, a crosscut having a length of 10 cm was formed with a utility knife such that the crosscut reached the base. Then, in accordance with the method for testing resistance to neutral salt spray described in JIS K 5600-7-1 (JIS Z 2371), a salt spray test was performed with a salt spray test instrument ST-11L (manufactured by Suga Test Instruments Co., Ltd.) for 240 hours, and the generation of rust and blister from the crosscut was visually evaluated. The evaluation criteria are as follows.
5: Neither rust nor blister is generated.
4: Rust or blister of less than 1 mm generated from the crosscut.
3: Rust or blister of 1 mm or more and less than 2 mm is generated from the crosscut.
2: Rust or blister of 2 mm or more is generated from the crosscut.
1: Rust and blister is generated on the entire surface.

### Evaluation of humidity resistance

Each specimen was set in a humidity resistance test instrument (humidity cabinet test instrument CT-3, manufactured by Suga Test Instruments Co., Ltd.), and the appearance after a lapse of 48 hours was visually evaluated according to the following criteria.
○: None of rust, blister, whitening, or the like is generated.
△: Rust, blister, whitening, or the like is slightly generated.
×: Rust, blister, whitening, or the like is greatly generated.

**[Table 1]**

| | | Example 1 | Example 2 | Example 3 | Example 4 | Example 5 | Example 6 |
|---|---|---|---|---|---|---|---|
| Aqueous base component (1) | | (1) | (2) | (1) | (1) | (1) | (1) |
| Aqueous epoxy resin dispersion (A) | (A-1) | 46.97 | 46.97 | 46.97 | 46.97 | 46.97 | 46.97 |
| | (A-2) | | | | | | |
| | (A-3) | | | | | | |
| | (A-4) | | | | | | |
| Inorganic anticorrosive pigment (B) | (B-1) | 12.95 | 12.95 | 12.95 | 12.95 | 12.95 | 12.95 |
| | (B-2) | | | | | | |
| | (B-3) | | | | | | |
| | (B-4) | | | | | | |
| Aqueous polyurethane resin dispersion | | | 3.81 | | | | |
| Aqueous curing agent (II) | | (1) | (1) | (2) | (3) | (4) | (5) |
| Aromatic group-containing polyamine compound (D) | (D-1) | 9.53 | 9.53 | 15.25 | 5.09 | 9.53 | 9.53 |
| | (D-2) | | | | | | |
| | (D-3) | | | | | | |
| Aliphatic group-containing polyamine compound | | | | | | | |
| Thiazole-based compound (C) | (C-1) | 2.02 | 2.02 | 2.02 | 2.02 | 0.13 | 8.63 |
| | (C-2) | | | | | | |
| | | | | | | | |
| Epoxy group content of (A): active hydrogen content of (D) | | 1:0.75 | 1:0.75 | 1:1.2 | 1:0.4 | 1:0.75 | 1:0.75 |
| Mass ratio (B):(C) | | 86.5:13.5 | 86.5:13.5 | 86.5:13.5 | 86.5:13.5 | 99:1 | 60:40 |
| Content (parts by mass) of (B) based on 100 parts by mass in total of resin solid contents of (A) and (D) | | 44.4 | 42.4 | 40.4 | 48.0 | 44.4 | 44.4 |
| Content (parts by mass) of (C) based on 100 parts by mass in total of resin solid contents of (A) and (D) | | 6.9 | 6.6 | 6.3 | 7.5 | 0.4 | 29.6 |
| Evaluation of coating film appearance | | 5 | 5 | 5 | 5 | 5 | 5 |
| Evaluation of water resistance | | 5 | 5 | 5 | 5 | 5 | 5 |
| Evaluation of corrosion resistance | | 5 | 5 | 5 | 5 | 5 | 5 |
| Evaluation of humidity resistance | | ○ | ○ | ○ | ○ | ○ | ○ |

**[Table 2]**

| | | Example 7 | Example 8 | Example 9 | Example 10 | Example 11 | Example 12 | Example 13 |
|---|---|---|---|---|---|---|---|---|
| Aqueous base component (I) | | (3) | (4) | (6) | (7) | (1) | (8) | (9) |
| Aqueous epoxy resin dispersion (A) | (A-1) | | | | 46.97 | 46.97 | 46.97 | 46.97 |
| | (A-2) | 46.97 | | | | | | |
| | (A-3) | | 46.97 | | | | | |
| | (A-4) | | | 46.97 | | | | |
| Inorganic anticorrosive pigment (B) | (B-1) | 12.95 | 12.95 | 12.95 | | 12.95 | | |
| | (B-2) | | | | 12.95 | | | |
| | (B-3) | | | | | | 12.95 | |
| | (B-4) | | | | | | | 12.95 |
| Aqueous polyurethane resin dispersion | | | | | | | | |
| Aqueous curing agent (II) | | (1) | (6) | (7) | (1) | (8) | (1) | (1) |
| Aromatic group-containing polyamine compound (D) | (D-1) | 9.71 | 2.15 | 22.17 | 9.53 | 9.53 | 9.53 | 9.53 |
| | (D-2) | | | | | | | |
| | (D-3) | | | | | | | |
| Aliphatic group-containing polyamine compound | | | | | | | | |
| Thiazole-based compound (C) | (C-1) | 2.02 | 2.02 | 2.02 | 2.02 | | 2.02 | 2.02 |
| | (C-2) | | | | | 6.31 | | |
| | | | | | | | | |
| Epoxy group content of (A): active hydrogen content of (D) | | 1:0.75 | 1:0.75 | 1:0.75 | 1:0.75 | 1:0.75 | 1:0.75 | 1:0.75 |
| Mass ratio (B):(C) | | 86.5:13.5 | 86.5:13.5 | 86.5:13.5 | 86.5:13.5 | 86.5:13.5 | 86.5:13.5 | 86.5:13.5 |
| Content (parts by mass) of (B) based on 100 parts by mass in total of resin solid contents of (A) and (D) | | 43.5 | 58.3 | 34.6 | 44.4 | 44.4 | 44.4 | 44.4 |
| Content (parts by mass) of (C) based on 100 parts by mass in total of resin solid contents of (A) and (D) | | 6.8 | 9.1 | 5.4 | 6.9 | 6.9 | 6.9 | 6.9 |
| Evaluation of coating film appearance | | 5 | 5 | 5 | 5 | 5 | 5 | 5 |
| Evaluation of water resistance | | 5 | 5 | 5 | 5 | 5 | 5 | 4 |
| Evaluation of corrosion resistance | | 5 | 5 | 5 | 5 | 5 | 5 | 3 |
| Evaluation of humidity resistance | | ○ | ○ | ○ | ○ | ○ | ○ | △ |

**[Table 3]**

| | | Example 14 | Example 15 | Example 16 | Example 17 | Example 18 | Example 19 | Example 20 | Example 21 |
|---|---|---|---|---|---|---|---|---|---|
| Aqueous base component (1) | | (1) | (1) | (1) | (1) | (1) | (1) | (10) | (1) |
| Aqueous epoxy resin dispersion (A) | (A-1) | 46.97 | 46.97 | 46.97 | 46.97 | 46.97 | 46.97 | 23.49 | 46.97 |
| | (A-2) | | | | | | | | |
| | (A-3) | | | | | | | 23.48 | |
| | (A-4) | | | | | | | | |
| Inorganic anticorrosive pigment (B) | (B-1) | 12.95 | 12.95 | 12.95 | 12.95 | 12.95 | 12.95 | 12.95 | 12.95 |
| | (B-2) | | | | | | | | |
| | (B-3) | | | | | | | | |
| | (B-4) | | | | | | | | |
| Aqueous polyurethane resin dispersion | | | | | | | | | |
| Aqueous curing agent (II) | | (9) | (10) | (11) | (12) | (13) | (14) | (1) | (15) |
| Aromatic group-containing polyamine compound (D) | (D-1) | | | 9.53 | 9.53 | 25.4 | 2.56 | 5.83 | 6.35 |
| | (D-2) | 10.25 | | | | | | | |
| | (D-3) | | 3.63 | | | | | | |
| Aliphatic group-containing polyamine compound | | | | | | | | | 1.71 |
| Thiazole-based compound (C) | (C-1) | 2.02 | 2.02 | 0.03 | 12.95 | 2.02 | 2.02 | 2.02 | 2.02 |
| | (C-2) | | | | | | | | |
| | | | | | | | | | |
| Epoxy group content of (A): active hydrogen content of (D) | | 1:0.75 | 1:0.75 | 1:0.75 | 1:0.75 | 1:2 | 1:0.2 | 1:075 | 1:0.5 |
| Mass ratio (B):(C) | | 86.5:13.5 | 86.5:13.5 | 99.8:0.2 | 50:50 | 86.5:13.5 | 86.5:13.5 | 86.5:13.5 | 86.5:13.5 |
| Content (parts by mass) of (B) based on 100 parts by mass in total of resin solid contents of (A) and (D) | | 42.9 | 46.2 | 44.4 | 44.4 | 34.9 | 50.4 | 51.4 | 44.7 |
| Content (parts by mass) of (C) based on 100 parts by mass in total of resin solid contents of (A) and (D) | | 6.7 | 7.2 | 0.1 | 44.4 | 5.4 | 7.9 | 8.0 | 7.0 |
| Evaluation of coating film appearance | | 5 | 5 | 5 | 5 | 5 | 5 | 5 | 5 |
| Evaluation of water resistance | | 5 | 4 | 4 | 4 | 4 | 4 | 5 | 5 |
| Evaluation of corrosion resistance | | 5 | 4 | 4 | 4 | 5 | 5 | 5 | 5 |
| Evaluation of humidity resistance | | ○ | ○ | △ | △ | ○ | ○ | ○ | ○ |

**[Table 4]**

| | | Comparative Example 1 | Comparative Example 2 | Comparative Example 3 |
|---|---|---|---|---|
| Aqueous base component (I) | | (11) | (1) | (1) |
| Aqueous epoxy resin dispersion (A) | (A-1) | 46.97 | 46.97 | 46.97 |
| | (A-2) | | | |
| | (A-3) | | | |
| | (A-4) | | | |
| Inorganic anticorrosive pigment (B) | (B-1) | | 12.95 | 12.95 |
| | (B-2) | | | |
| | (B-3) | | | |
| | (B-4) | | | |
| Aqueous polyurethane resin dispersion | | | | |
| Aqueous curing agent (II) | | (1) | (16) | (17) |
| Aromatic group-containing polyamine compound (D) | (D-1) | 9.53 | 9.53 | |
| | (D-2) | | | |
| | (D-3) | | | |
| Aliphatic group-containing polyamine compound | | | | 5.12 |
| Thiazole-based compound (C) | (C-1) | 2.02 | | 2.02 |
| | (C-2) | | | |
| | | | | |
| Epoxy group content of (A): active hydrogen content of (D) | | 1:0.75 | 1:0.75 | 1:0 |
| Mass ratio (B):(C) | | 0:100 | 100:0 | 86.5:13.5 |
| Content (parts by mass) of (B) based on 100 parts by mass in total of resin solid contents of (A) and (D) | | 0 | 44.4 | 45.4 |
| Content (parts by mass) of (C) based on 100 parts by mass in total of resin solid contents of (A) and (D) | | 6.9 | 0 | 7.1 |
| Evaluation of coating film appearance | | 5 | 5 | 5 |
| Evaluation of water resistance | | 2 | 1 | 1 |
| Evaluation of corrosion resistance | | 2 | 1 | 2 |
| Evaluation of humidity resistance | | × | × | × |

The components shown in the above tables are as follows. Aqueous epoxy resin dispersion (A)
Aqueous epoxy resin dispersion (A-1): BECKOPOX EP 386w/52WA (manufactured by Daicel-Allnex Ltd.), polyol-modified bisphenol A type epoxy resin; epoxy equivalent: 518 g/eq, number average molecular weight: 917, solid concentration: 52%
Aqueous epoxy resin dispersion (A-2): BECKOPOX EP 384w/53WA (manufactured by Daicel-Allnex Ltd.), polyol-modified bisphenol A type epoxy resin; epoxy equivalent: 520 g/eq, number average molecular weight: 2,137, solid concentration: 53%
Aqueous epoxy resin dispersion (A-3): BECKOPOX EP 2307w/45WAMP (manufactured by Daicel-Allnex Ltd.), polyol-modified bisphenol A type epoxy resin; epoxy equivalent: 1,980 g/eq, number average molecular weight: 5,735, solid concentration: 45%
Aqueous epoxy resin dispersion (A-4): BECKOPOX EP 2340w/56WA (manufactured by Daicel-Allnex Ltd.), water-dispersible bisphenol A type epoxy resin; epoxy equivalent: 240 g/eq, number average molecular weight: 462, solid concentration: 56%

### Inorganic anticorrosive pigment (B)

Inorganic rust inhibitor (B-1): Phosphoric acid-based anticorrosive pigment, LF BOUSEI PM-300C (aluminum tripolyphosphate-based, manufactured by Kikuchi Color & Chemicals Corporation)
Inorganic rust inhibitor (B-2): Phosphoric acid-based anticorrosive pigment, K-WHITE #140W (condensed aluminum phosphate-based, manufactured by TAYCA Corporation)
Inorganic rust inhibitor (B-3): Molybdenum-based anticorrosive pigment, LF BOUSEI M-PSN (zinc molybdate-based, manufactured by Kikuchi Color & Chemicals Corporation)
Inorganic rust inhibitor (B-4): Zinc oxide-based anticorrosive pigment, second type of zinc oxide (zinc oxide, manufactured by Sakai Chemical Industry Co., Ltd.)

### Thiazole-based compound (C)

Thiazole-based compound (C-1): HALOX 350 (manufactured by ICL SPECIALTY PRODUCTS INC.), (benzothiazol-2-ylthio)succinic acid, solid concentration: 100%
Thiazole-based compound (C-2): Asconium 142DA (manufactured by ASCOTEC), benzothiazole-2-thiol, solid concentration: 32%

### Aromatic group-containing polyamine compound (D)

Aromatic group-containing polyamine compound (D-1): NX-8101 (manufactured by Cardolite Corporation), phenalkamine-based modified aliphatic polyamine: number of carbon atoms of linear or branched hydrocarbon group: 15, active hydrogen equivalent: 135 g/eq, solid concentration: 50%
Aromatic group-containing polyamine compound (D-2): NX-8401 (manufactured by Cardolite Corporation), phenalkamine-based modified aliphatic polyamine: number of carbon atoms of linear or branched hydrocarbon group: 15, active hydrogen equivalent: 164 g/eq, solid concentration: 56.5%
Aromatic group-containing polyamine compound (D-3): Gaskamine 240 (manufactured by MITSUBISHI GAS CHEMICAL COMPANY, INC.), active hydrogen equivalent: 103 g/eq, solid concentration: 100%

Aqueous polyurethane resin dispersion: NeoRez R-4000 (manufactured by DSM Coating Resins B.Y.; solid concentration: 35%)
Aliphatic group-containing polyamine compound: BECKOPOX EH 613w/80WA (manufactured by Allnex Japan Inc.), aliphatic polyamine: active hydrogen equivalent: 116 g/eq, solid concentration: 80%

As shown in the above tables, it was confirmed that all of the anticorrosive coating films formed by using the aqueous anticorrosive coating compositions of Examples had good coating film appearance, and also had good water resistance, corrosion resistance, and moisture resistance.

Comparative Example 1 is an example in which the inorganic anticorrosive pigment (B) is not contained. In this example, it was confirmed that water resistance, corrosion resistance, and moisture resistance were poor.

Comparative Example 2 is an example in which the thiazole-based compound (C) is not contained. In this example, it was confirmed that water resistance, corrosion resistance, and moisture resistance were poor.

Comparative Example 3 is an example in which the polyamine compound of the curing agent does not contain an aromatic group. In this example, it was confirmed that water resistance, corrosion resistance, and moisture resistance were significantly poor.

From Comparative Examples 1 to 3, it can be understood that a good corrosion resistance is achieved with the aqueous anticorrosive coating composition by a configuration including all of the specific components (A) to (D).

### INDUSTRIAL APPLICABILITY

The aqueous anticorrosive coating composition can impart an anticorrosion property, for example, to a metal base, and in particular, can impart a good corrosion resistance to both a steel based-material and an aluminum based-material.

## Claims

1. An aqueous anticorrosive coating composition comprising an aqueous base component (I) and an aqueous curing agent (II), wherein
the aqueous base component (I) comprises an aqueous epoxy resin dispersion (A) and an inorganic anticorrosive pigment (B), and
the aqueous curing agent (II) comprises an aromatic group-containing polyamine compound (D) and a thiazole-based compound (C).

2. The aqueous anticorrosive coating composition according to claim 1, wherein
the inorganic anticorrosive pigment (B) comprises one or more pigments selected from the group consisting of a phosphoric acid-based anticorrosive pigment, a zinc oxide-based anticorrosive pigment, a molybdenum-based anticorrosive pigment, a boric acid-based anticorrosive pigment, a borosilicic acid-based anticorrosive pigment, a phosphosilicic acid-based anticorrosive pigment, a vanadic acid-based anticorrosive pigment, and a tungstic acid-based anticorrosive pigment.

3. The aqueous anticorrosive coating composition according to claim 1 or 2, wherein
a mass ratio [(B) : (C)] of the inorganic anticorrosive pigment (B) to the thiazole-based compound (C) contained in the aqueous anticorrosive coating composition is in a range of (B) : (C) = 99.5 : 0.5 to 60 : 40.

4. The aqueous anticorrosive coating composition according to any one of claims 1 to 3, wherein the inorganic anticorrosive pigment (B) comprises a phosphoric acid-based anticorrosive pigment and a molybdenum-based anticorrosive pigment.

5. The aqueous anticorrosive coating composition according to any one of claims 1 to 4, wherein the aromatic group-containing polyamine compound (D) comprises a polyamine compound containing a hydroxyl group and an aromatic group.

6. The aqueous anticorrosive coating composition according to any one of claims 1 to 5, wherein the aromatic group-containing polyamine compound (D) comprises a water-soluble polyamine compound having a hydroxyl group, a linear or branched hydrocarbon group having 6 to 30 carbon atoms, and an aromatic group.

7. The aqueous anticorrosive coating composition according to any one of claims 1 to 6, wherein the aromatic group-containing polyamine compound (D) is a phenalkamine compound.

8. The aqueous anticorrosive coating composition according to any one of claims 1 to 7, wherein the aqueous epoxy resin dispersion (A) has an epoxy equivalent in a range of 100 to 10,000 g/eq.

9. The aqueous anticorrosive coating composition according to any one of claims 1 to 8, wherein a ratio of an epoxy group content of the aqueous epoxy resin dispersion (A) contained in the aqueous base component (I) to an active hydrogen content of the aromatic group-containing polyamine compound (D) contained in the aqueous curing agent (II) is in a range of [epoxy group content of (A)]: [active hydrogen content of (D)] = 1:0.4 to 1:1.2.

10. The aqueous anticorrosive coating composition according to any one of claims 1 to 9, wherein the aqueous anticorrosive coating composition further comprises an aqueous polyurethane resin dispersion.

11. The aqueous anticorrosive coating composition according to any one of claims 1 to 10, wherein the thiazole-based compound (C) comprises a benzothiazole compound.

12. The aqueous anticorrosive coating composition according to any one of claims 1 to 11, which is for an aluminum based-material and a steel based-material.
